# EUROPEAN PATENT APPLICATION

(11) **EP 4 553 121 A1**
(43) Date of publication of application: **14.05.2025**
(21) Application number: 23831867.9
(22) Date of filing: 27.06.2023
(51) Int. Cl.: C09D 179/08, C09D 7/61, C09D 7/40, C09D 7/20, C08K 3/36, C08K 9/06, C08K 5/5419, C08G 73/10, C08L 79/08

(54) **SELF-LUBRICATING POLYIMIDE VARNISH AND POLYIMIDE COATING PREPARED THEREFROM**

(30) Priority: 29.06.2022 KR 20220079988
(71) Applicant: PI Advanced Materials Co., Ltd., Chungcheongbuk-do 27818 (KR)
(72) Inventor: RO, Gyeong Hyeon, Jincheon-gun, Chungcheongbuk-do 27818 (KR); MOON, Gyeong Min, Jincheon-gun, Chungcheongbuk-do 27818 (KR); KIM, Se Jong, Jincheon-gun, Chungcheongbuk-do 27818 (KR); LEE, Ik Sang, Jincheon-gun, Chungcheongbuk-do 27818 (KR)
(74) Representative: Onsagers AS
(86) International application number: PCT/KR2023/008954
(87) International publication number: WO 2024/005508

(57) **Abstract**

The present invention provides polyimide varnish comprising: polyamic acid comprising, as a polymerization unit, at least one dianhydride monomer and at least one diamine monomer; nano silica surface-modified with an organosilane; a silicone-based additive represented by Chemical Formula 1; and an organic solvent.

## Description

The present invention relates to a self-lubricating polyimide varnish and polyimide, polyimide coating material, polyimide molded body, and components prepared therefrom.

Polyimide resin refers to a highly heat-resistant resin obtained by performing solution polymerization on aromatic dianhydride and aromatic diamine or aromatic diisocyanate to prepare a polyamic acid derivative, followed by ring-closure dehydration at high temperature and imidization. The polyimide resin is an insoluble, infusible, ultra-high heat-resistant resin and has excellent properties such as thermal oxidation resistance, heat resistance, radiation resistance, low-temperature characteristics, chemical resistance, and the like, and thus it is used in a wide range of fields, including heat-resistant advanced materials such as automotive materials, aviation materials, and spacecraft materials, etc., and electronic materials such as insulating coatings, insulating films, semiconductors, and electrode protective films of TFT-LCD. Recently, the polyimide resin is also used in display materials such as optical fibers and liquid crystal alignment films, transparent electrode films by containing conductive filler in the films or performing surface coating, etc.

In particular, insulated wires used as windings for coils such as motors require a conductor-coating insulation layer (insulating film) that offers excellent insulation, adhesion to the conductor, heat resistance, mechanical strength, etc. Therefore, polyimide is used as a resin to form the insulation layer.

Specifically, polyimide varnish is coated as an insulating coating for the windings of electric vehicles (EVs), processed into a hairpin shape, and inserted into the motor core. However, this process has a problem in that the processability is reduced due to the shape deformation of the windings when the friction force is high.

Therefore, there is a need for a polyimide varnish for winding/wire coating that has excellent adhesion to a conductor while simultaneously satisfying the heat resistance, insulation, and mechanical properties of polyimide, with excellent process efficiency due to reduced friction.

An object of the present invention is to provide a self-lubricating polyimide varnish with a low coefficient of friction.

Another object of the present invention is to provide a polyimide prepared by imidizing the polyimide varnish.

Still another object of the present invention is to provide a polyimide coating material comprising a cured product of the polyimide varnish.

Still another object of the present invention is to provide a component comprising a molded body formed from the polyimide varnish.

Still another object of the present invention is to provide a method for preparing the polyimide varnish. Technical Solution

Various modifications can be made and various embodiments may be implemented in the present disclosure, and specific embodiments are illustrated in the drawings and described in detail. However, it should be understood that this is not intended to limit the present disclosure to specific embodiments, and comprises all modifications, equivalents, and substitutes included in the spirit and scope of the present disclosure.

Terms used in the present application are only used to describe specific embodiments and are not intended to limit the present disclosure. Singular expressions shall include plural expressions unless the context clearly indicates otherwise. In the present specification, terms such as "comprise" or "have" are intended to designate the presence of features, numbers, steps, operations, elements, components, or combinations thereof described in the specification and it should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

When ranges of numerical values are stated herein, unless otherwise stated, it is intended that the endpoints of the range and the scope of the parent invention within the range are not limited to the specific values stated when defining the range.

As used herein, "dianhydride" is intended to include precursors or derivatives thereof, which are also referred to as "dianhydride" or "acid dianhydride". This product may technically not be dianhydrides, but will nonetheless react with diamine to form a polyamic acid, and the polyamic acid may be converted back into polyimide.

As used herein, "diamine" is intended to include precursors or derivatives thereof, which may technically not be diamines, but will nonetheless react with acid dianhydride to form a polyamic acid, and the polyamic acid may be converted back into polyimide.

In the present invention, "C_{x-y}" means having a carbon number of x or more and y or less.

As used herein, the term "C₁₋₂₀ alkyl" means a C₁₋₂₀ straight or branched chain saturated hydrocarbon such as methyl, ethyl, propyl, isopropyl, butyl, pentyl, or hexyl. Preferred alkyl groups include from about 1 to 20 carbon atoms in the chain. Side chain means that at least one lower alkyl group, such as methyl, ethyl or propyl, is attached to the linear alkyl chain. "Lower alkyl" means a group having from about 1 to about 20 carbon atoms in the chain that may be straight or branched. The "alkyl" may be unsubstituted or optionally substituted by one or more substituents that may be the same or different, each substituent being halogen, alkyl, aryl, cycloalkyl, cyano, hydroxy, alkoxy, alkylthio, amino, carboxy, and the like. Preferably, alkyl may be methyl or ethyl. As used herein, 'methyl (methyl group)' is the smallest alkyl group with a structure in which three hydrogen atoms are bonded to one carbon atom. This methyl group may exist in three forms: anion, cation, and free radical.

The term "C₆₋₂₀ aryl" as used herein refers to an aromatic hydrocarbon containing 6 to 20 carbon atoms. For example, the aryl may refer to monocyclic (for example, phenyl) or bicyclic (for example, indenyl, naphthalenyl, tetrahydronaphthyl, tetrahydroindenyl) ring system. Preferably, aryl may be a phenyl group with the Chemical Formula C₆H₅, in which six carbon atoms are arranged in a cyclic ring structure.

Unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in the present application, it is not to be construed in an idealized or overly formal sense. Specific details for the implementation of the invention will be described below.

### Self-lubricating polyimide varnish of the present invention

The present invention relates to a self-lubricating polyimide varnish having a lower coefficient of friction and being usable for application in conductor coating.

In one general aspect, there is provided a polyimide varnish comprising: polyamic acid comprising, as a polymerization unit, at least one dianhydride monomer and at least one diamine monomer;
surface-modified nanosilica with organosilane;
a silicone-based additive represented by the following Chemical Formula 1; and
an organic solvent: 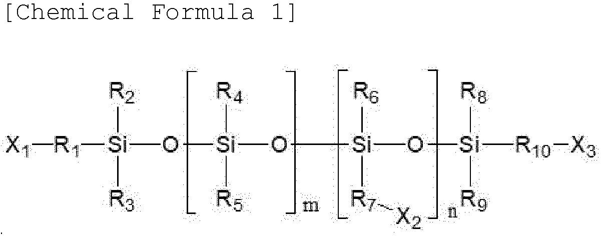
in Chemical Formula 1 above,
R₁ to R₁₀ are each independently a C₁₋₂₀ alkyl group or a C₆₋₂₀ aryl group; and
X₁ to X₃ are each independently a hydrogen atom, a C₁₋₃ alkyl group, a C₆₋₁₀ aryl group, a hydroxyl group, an amino group, an epoxy group, an acrylic group, an acid anhydride group, a carboxyl group, a methacryl group, a mercapto group, an alkoxy group, a silanol group, or a polyether group,
wherein at least one of X₁ to X₃ is a hydroxyl group, an amino group, an epoxy group, an acrylic group, an acid anhydride group, a carboxyl group, a methacryl group, a mercapto group, an alkoxy group, a silanol group or a polyether group, and
m and n are each independently an integer from 0 to 50, where m+n is 1 or more.

### Polyamic acid

In the present disclosure, the dianhydride monomer may comprise at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl) propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy) benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic dianhydride, 1,4,5,8-naphthalenetetracarboxylic dianhydride, and 4,4'-(2,2-hexafluoroisopropylidene)diphthalic acid dianhydride.

Specifically, the dianhydride monomer may comprise at least one selected from the group consisting of pyromellitic dianhydride (PMDA), biphenyl tetracarboxylic dianhydride (BPDA), and benzophenone tetracarboxylic dianhydride (BTDA), and preferably, pyromellitic dianhydride (PMDA).

In addition, the diamine monomer may comprise at least one selected from the group consisting of 1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 4,4'-diamino diphenyl ether, 3,4'-diaminodiphenyl ether, 4,4'-diaminodiphenylmethane (MDA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenyl methane, 3,3'-dicarboxy-4,4'-diaminodiphenylmethane, 3,3',5,5'-tetramethyl-4,4'-diamino diphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenylphenoxy)benzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy) phenyl] ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy) phenyl] propane, 2,2-bis[3-(4-aminophenoxy) phenyl] propane, 2,2-bis[4-(3-aminophenoxy) phenyl] propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

Specifically, the diamine monomer may comprise at least one selected from the group consisting of 1,4-diaminobenzene (PPD), 4,4'-diaminodiphenyl ether (ODA), and 2,2-bisaminophenoxyphenylpropane (BAPP), and preferably, may be 4,4'-diaminodiphenyl ether (ODA).

In the present invention, in the total dianhydride monomers, pyromellitic dianhydride (PMDA) may contain in a ratio of 50 mol% or more, specifically 60 mol% or more, 70 mol% or more, 75 mol% or more, 80 mol% or more, 85 mol% or more, 90 mol% or more, 95 mol% or more, 99 mol% or more, or 100 mol% or more.

Further, in the total diamine monomers, 4,4'-diaminodiphenyl ether (ODA) may contain in a ratio of 50 mol% or more, specifically 60 mol% or more, 70 mol% or more, 75 mol% or more, 80 mol% or more, 85 mol% or more, 90 mol% or more, 95 mol% or more, 99 mol% or more, or 100 mol% or more.

The polyamic acid may comprise 95 to 105 mol% of the dianhydride monomer based on 100 mol% of diamine monomer. For example, the lower limit of the dianhydride monomer may be 95.5 mol% or more, 96 mol% or more, 96.5 mol% or more, 97 mol% or more, 97.5 mol% or more, 98 mol% or more, 98.5 mol% or more, 99 mol% or more, or 99.5 mol% or more, and the upper limit thereof may be 105 mol% or less, 104.5 mol% or less, or 104 mol% or less.

In addition, a molar ratio of the dianhydride monomer (mol%) / diamine monomer (mol%) may be 95 to 105, specifically 97.5 to 102.5, more specifically 99 to 101, and even more specifically 99.4 to 99.9. In an embodiment, the molar ratio of the dianhydride monomer (mol%) / diamine monomer (mol%) is 99.6, 99.7, and 103.8.

Further, the polyimide varnish of the present invention may additionally comprise an aromatic carboxylic acid. The aromatic carboxylic acid may be further added to form an optimal molar ratio.

The aromatic carboxylic acid may comprise at least one selected from the group consisting of pyromellitic acid (PMA), 3,3',4,4'-biphenyltetracarboxylic acid (BPTA), 1,2,3,4-benzenetetracarboxylic acid, benzophenone-3,3',4,4'-tetracarboxylic acid, pyrazinetetracarboxylic acid, 2,3,6,7-naphthalenetetracarboxylic acid, and naphthalene-1,4,5,8-tetracarboxylic acid. In an embodiment, pyromellitic acid (PMA) was used.

Further, the aromatic carboxylic acid that may be further included may be added in an amount of 0 to 1.0 mol%, specifically, 0 to 0.8 mol%, and more preferably 0.1 to 0.6 mol%. Here, 0 mol% may mean that the aromatic carboxylic acid is not included in the polyimide varnish.

### Surface-modified Nanosilica with organosilane

The polyimide varnish of the present invention may comprise inorganic particles to improve physical properties, such as pulse endurance, etc., wherein the inorganic particles are nanosilica, i.e., nano-sized silicon dioxide (SiO₂) fine particles with an average particle diameter of 1000 nm or less, and their form and shape are not specifically limited.

The organosilane of the surface-modified nanosilica with organosilane in the present invention may comprise at least one selected from the group consisting of methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltrimethoxysilane, phenyltriethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, vinyltris(2-methoxyethoxy)silane, glycidoxypropyl trimethoxysilane (GPTMS), 3-aminopropyltrimethoxy-silane (APTMS), phenyltrimethoxysilane (PTMS), and N-phenyl-3-aminopropyltrimethoxysilane (PAPTES). Specifically, the organosilane of the surface-modified nanosilica with organosilane may comprise at least one selected from methyltrimethoxysilane, hexamethyldisiloxane, phenyltrimethoxysilane, hexyltrimethoxysilane, aminopropyltrimethoxysilane, and phenylaminopropyltrimethoxysilane. In an embodiment, the organosilane may comprise methyltrimethoxysilane or hexamethyldisiloxane.

Further, the surface-modified nanosilica with organosilane may be obtained by combining, on a surface of the nanosilica, a compound comprising at least one phenyl group at a terminal end and a compound comprising at least one amine group, hydroxyl group, thiol group, or epoxide group at a terminal end. Specifically, the compound comprising at least one phenyl group at the terminal end may be phenyltrimethoxysilane (PTMS) or N-phenyl-3-aminopropyltrimethoxysilane (PAPTES). Further, the compound comprising at least one amine group, hydroxyl group, thiol group, or epoxide group at the terminal end may be glycidoxypropyl trimethoxysilane (GPTMS) or 3-aminopropyl trimethoxy-silane (APTMS).

The surface-modified nanosilica with organosilane may be prepared by surface-treating the nanosilica with organosilane. For example, nanosilica may be obtained by heating organosilanes under acidic or basic conditions to perform surface treatment for about 1 to 24 hours. In addition, the surface modification may be achieved by other known methods, for example, by mixing organosilanes in a solvent and reacting at a temperature of 10 to 100°C or 20 to 60°C for 1 to 10 hours or 1 to 5 hours to obtain surface-modified nanosilica. To combine two or more compounds on the surface of the nanosilica, each of the above methods may be performed.

The surface-modified nanosilica with organosilane of the present invention may prevent the aggregation of inorganic particles in the polyimide varnish, and may enhance the interaction with solid content (polyamic acid) due to functional groups of the compound, thereby improving the organic-inorganic hybridization.

Further, the surface-modified nanosilica with organosilane may have an average particle diameter of 10 to 200 nm, for example, an average particle diameter of 10 to 190 nm, 20 to 180 nm, 30 to 170 nm, 40 to 160 nm, or 50 to 150 nm.

The surface-modified nanosilica with organosilane may also contain in an amount of 0.3 to 7.0 parts by weight, based on 100 parts by weight of the total polyimide varnish. For example, the amount of the surface-modified nanosilica with organosilane may have, for example, a lower limit of 0.35 parts by weight or more, 0.40 parts by weight or more, 0.45 parts by weight or more, 0.50 parts by weight or more, 0.55 parts by weight or more, or 0.35 parts by weight or more. In addition, for example, the upper limit thereof may be, for example, 6 parts by weight or less, 5 parts by weight or less, 3 parts by weight or less, 2 parts by weight or less, 1.5 parts by weight or less, 1.25 parts by weight or less, 1.20 parts by weight or less, 1.15 parts by weight or less, 1.10 parts by weight or less, 1.05 parts by weight or less, 1.0 parts by weight or less, 0.95 parts by weight or less, 0.9 parts by weight or less, 0.85 parts by weight or less, 0.8 parts by weight or less, 0.79 parts by weight or less, 0.78 parts by weight or less, 0.77 parts by weight or less, or 0.76 parts by weight or less. When the amount of the surface-modified nanosilica with organosilane is less than 0.3 parts by weight, it is not effective in improving properties, and when the amount thereof exceeds 7 parts by weight, haze and deterioration of physical properties may occur due to agglomeration and reduced usability.

### Silicone-based additive

The polyimide varnish of the present invention reduces the coefficient of friction by comprising a silicone-based additive. The silicone-based additive of the present invention refers to modified silicone oil having a linear siloxane backbone and a functional group other than hydrogen or a hydrocarbon group in the molecular structure.

Specifically, the silicone-based additive represented by Chemical Formula 1 above may be a silicone-based additive represented by the following Chemical Formula 2: 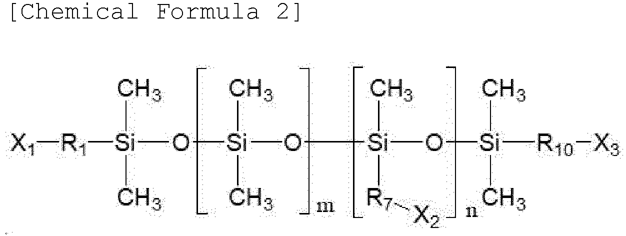 in Chemical Formula 2 above,
R₁, R₇, and R₁₀ are each independently a C₁₋₂₀ alkyl group; and
X₁ to X₃ are each independently a hydrogen atom, a C₁₋₃ alkyl group, a C₆₋₁₀ aryl group, a hydroxyl group, an amino group, an epoxy group, an acrylic group, an acid anhydride group, a carboxyl group, a methacryl group, a mercapto group, an alkoxy group, a silanol group, or a polyether group,
wherein at least one of X₁ to X₃ is a hydroxyl group, an amino group, an epoxy group, an acrylic group, an acid anhydride group, a carboxyl group, a methacryl group, a mercapto group, an alkoxy group, a silanol group or a polyether group, and
m and n are each independently an integer from 0 to 50, where m+n is 1 or more.

Further, the silicone-based additive represented by Chemical Formula 1 above may be a silicone-based additive represented by the following Chemical Formula 3: 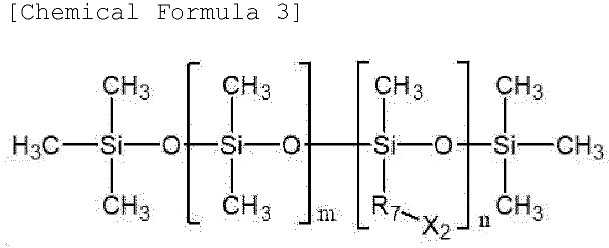 in Chemical Formula 3 above,
R₇ is a C₁₋₂₀ alkyl group,
X₂ is a hydroxyl group, an amino group, an epoxy group, an acrylic group, an acid anhydride group, a carboxyl group, a methacryl group, a mercapto group, an alkoxy group, a silanol group or a polyether group, and
m and n are each independently an integer from 0 to 50, where m+n is 1 or more.
Preferably, in Chemical Formula 3 above, X₂ may be an amino group.

Further, the silicone-based additive represented by Chemical Formula 1 above may be a silicone-based additive represented by the following Chemical Formula 4: 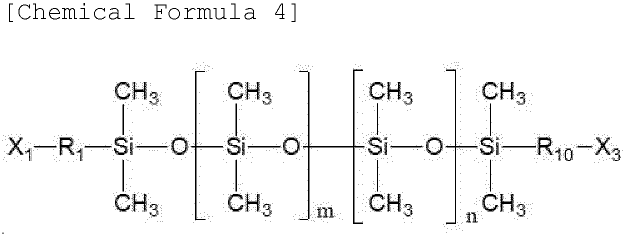
in Chemical Formula 4 above, R₁, R₁₀, X₁, X₃, m, and n are defined as described above.
R₁ and R₁₀ are each independently a C₁₋₂₀ alkyl group, and
X₁ and X₃ are each independently a hydroxyl group, an amino group, an epoxy group, an acrylic group, an acid anhydride group, a carboxyl group, a methacryl group, a mercapto group, an alkoxy group, a silanol group or a polyether group, and m and n are each independently an integer from 0 to 50, wherein m+n is 1 or more.

Preferably, in Chemical Formula 4, X₁ and X₃ may each independently be an amino group.

In addition, the silicone-based additive may have a refractive index of 1.40 to 1.50 (based on 25°C), a functional group equivalent of 100 to 10,000 g/mol, and a viscosity of 10 to 20,000 cP (based on 25°C), wherein the functional group may be a hydroxyl group, an amino group, an epoxy group, an acrylic group, an acid anhydride group, a carboxyl group, a methacryl group, a mercapto group, an alkoxy group, a silanol group, or a polyether group.

As used herein, the functional group equivalent refers to the mass of the main skeleton bonded to one functional group, and is a value obtained by dividing the weight average molecular weight of the silicone-based additive by the number of functional groups per molecule. In other words, the functional group equivalent of the present invention means a value represented by the following Equation: Functional group equivalent (g/mol) = Total weight average molecular weight (g/mol) / Number of functional groups

For example, when a silicone-based additive having a total molecular weight of 1,000 g/mol contains two functional groups in the molecule, the functional group equivalent is 500 g/mol.

Preferably, the silicone-based additive may have a refractive index of 1.40 to 1.45 (based on 25°C), a functional group equivalent of 200 to 9,000 g/mol, and a viscosity of 10 to 1,000 cP (based on 25°C), wherein the functional group may be a hydroxyl group, an amino group, an epoxy group, an acrylic group, an acid anhydride group, a carboxyl group, a methacryl group, a mercapto group, an alkoxy group, a silanol group, or a polyether group.

More preferably, the silicone-based additive may have a refractive index of 1.40 to 1.42 (based on 25°C), a functional group equivalent of 300 to 8,000 g/mol, and a viscosity of 10 to 800 cP (based on 25°C), wherein the functional group may be a hydroxyl group, an amino group, an epoxy group, an acrylic group, an acid anhydride group, a carboxyl group, a methacryl group, a mercapto group, an alkoxy group, a silanol group, or a polyether group.

Even more preferably, the refractive index may be 1.40 to 1.42 (based on 25°C), the functional group equivalent weight may be 400 to 6,000 g/mol, the viscosity may be 10 to 500 cP (based on 25°C), and the functional group may be an amino group.

In an embodiment, as a side-chain amino-modified silicone, a silicone-based additive having a refractive index of 1.405 (based on 25°C), an amino group equivalent of 5,000 g/mol, and a viscosity of 110 cP (based on 25°C) may be used.

In an embodiment, as a side-chain amino-modified silicone, a silicone-based additive having a refractive index of 1.408 (based on 25°C), an amino group equivalent of 1,600 g/mol, and a viscosity of 1,000 cP (based on 25°C) may be used.

In an embodiment, as both-end amino-modified silicone, a silicone-based additive having a refractive index of 1.418 (based on 25°C), an amino group equivalent of 400 g/mol, and a viscosity of 12 cP (based on 25°C) may be used.

In the present invention, the silicone-based additive may contain in an amount of 0.05 to 5 parts by weight based on 100 parts by weight of the total polyimide varnish. Specifically, for example, the lower limit thereof may be 0.2 parts by weight or more, 0.06 parts by weight or more, 0.07 parts by weight or more, 0.08 parts by weight or more, 0.09 parts by weight or more, 0.1 parts by weight or more, 0.2 parts by weight or more, 0.3 parts by weight or more, 0.4 parts by weight or more, or 0.5 parts by weight or more, and the upper limit thereof may be 4 parts by weight or less, 3 parts by weight or less, 2 parts by weight or less, 1.8 parts by weight or less, 1.6 parts by weight or less, 1.4 parts by weight or less, 1.2 parts by weight or less, 1.0 parts by weight or less, 0.8 parts by weight or less, or 0.6 parts by weight or less.

When the amount of the silicone-based additive exceeds 5 parts by weight, it is not preferable since the mechanical properties of the polyimide coating material to be prepared may deteriorate, and the silicone-based additive may decompose at a high temperature during heat treatment for imidization, which may result in a decrease in adhesion between the polyimide coating material and the conductor or an increase in haze. On the other hand, when the amount of the silicone-based additive is less than 0.05 parts by weight, it is not preferable since there is no effect of improving the coefficient of friction.

### organic solvent

In the present invention, the organic solvent may comprise at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), Diglyme, and naphthalene. Preferably, N-methyl-pyrrolidone (NMP), N,N'-dimethylformamide (DMF), N,N'-dimethylacetamide (DMAc), dimethyl sulfoxide (DMSO), etc., may be used.

The organic solvent may further comprise a modifier containing a hydroxyl group (OH) or amine group (NH). Examples of the modifier containing a hydroxyl group (OH) or an amine group (NH) may include ethylamine, triethanolamine, dimethylamine, trimethylamine, diethylenetriamine, ethylenediamine, tributylamine, pyridine, pyrrolidine, methanol, ethanol, propanol, isopropanol, sec-butanol, tert-butanol, n-amyl alcohol, isoamyl alcohol, hexanol, octanol, capryl alcohol, nonyl alcohol, decyl alcohol, undecyl alcohol, lauryl alcohol, myristyl alcohol, cetyl alcohol, stearyl alcohol, allyl alcohol, crotyl alcohol, propargyl alcohol, ethylene glycol, propylene glycol, benzyl alcohol, phenol, and the like. The modifier may control reactivity by reacting with the dianhydride monomer.

The organic solvent may be used for synthesizing polyamic acid by polymerizing a dianhydride monomer and a diamine monomer, and the organic solvent may be included in an amount of 50 to 80 parts by weight, and preferably 60 to 75 parts by weight, based on 100 parts by weight of the total polyimide varnish.

In addition, the polyimide solid content may be included in an amount of 10 to 30 parts by weight based on 100 parts by weight of the total polyimide varnish, and specifically, for example, the lower limit thereof may be 12 parts by weight, 15 parts by weight, 20 parts by weight, 21 parts by weight, 22 parts by weight, 23 parts by weight, 24 parts by weight, or 25 parts by weight or more, and the upper limit thereof may be 30 parts by weight, 29 parts by weight, 28 parts by weight, or 27 parts by weight or less. By adjusting the solid content of the polyimide varnish, it is possible to control the increase in viscosity and to shorten the processing time during the curing process.

### Polyimide varnish and cured product thereof

The polyimide varnish may have a viscosity of 500 cP to 20,000 cP measured at a temperature of 30°C and a shear rate of 1s⁻¹. For example, the upper limit of the viscosity may be 20,000 cP, 15,000 cP, 10,000 cP or less. The lower limit of the viscosity is not particularly limited, but may be 1,000 cP, 1,500 cP, 2,000 cP or 2,500 cP or more. The viscosity may be measured using, for example, Haake's Rheostress 600 and may be measured under the conditions of a shear rate of 1/s, a temperature of 30°C, and a plate gap of 1 mm. The present invention may provide a polyimide varnish with excellent processability by adjusting the viscosity range.

The polyimide varnish according to the present invention may have a coefficient of thermal expansion (CTE) of 60 ppm/°C or less after curing For example, the upper limit of the CTE may be 55 ppm/°C or less, 50 ppm/°C or less, 45 ppm/°C or less, 40 ppm/°C or less, 38 ppm/°C or less, 36 ppm/°C or less, 35 ppm/°C or less, or 30 ppm/°C or less, and the lower limit thereof may be, for example, 0.1 ppm/°C, 1 ppm/°C, 2.0 ppm/°C, 2.6 ppm/°C, 2.8 ppm/°C, 3.5 ppm/°C, or 4 ppm/°C or more. In an embodiment, the coefficient of thermal expansion may be measured at 100 to 350°C. In an embodiment, the CTE may be determined using TA's thermomechanical analyzer Q400, specifically, by forming a polyimide as a film, cutting the formed polyimide film into a width of 2 mm and a length of 10 mm, raising a temperature from room temperature up to 350°C at a rate of 10°C/min while applying a tension of 0.02 N in a nitrogen atmosphere, and measuring the slope in the 100°C to 250°C section.

The polyimide varnish according to the present invention may have, for example, a glass transition temperature (Tg) after curing in a range of 250°C to 450°C. For example, the lower limit of the glass transition temperature may be 250°C or more, 255°C or more, 260°C or more, 270°C or more, or 300°C or more. The upper limit thereof may be 445°C or less, 440°C or less, 435°C or less, 430°C or less, 425°C or less, 420°C or less, 415°C or less, 410°C or less, or 400°C or less. In an embodiment, the glass transition temperature may be measured using TMA at 10°C/min for the polyimide prepared by curing the polyimide varnish.

A thermal decomposition temperature (Td) at 5 wt% weight loss after curing of the polyimide varnish according to the present invention may be 450°C or higher. The thermal decomposition temperature may be measured using TA's thermogravimetric analyzer Q50. In a specific example, the polyimide cured with the polyimide varnish is heated up to 150°C at a rate of 10°C/min in a nitrogen atmosphere and then isothermalized for 30 minutes to remove moisture. Then, the temperature may be raised up to 600°C at a rate of 10°C/min, and the temperature at which a 1% weight loss occurs may be measured. The lower limit of the thermal decomposition temperature may be, for example, 450°C or higher, 460°C or higher, 470°C or higher, or 480°C or higher. The upper limit may be, for example, 800°C or lower or 600°C or lower.

In addition, the polyimide cured with the polyimide varnish may have an elongation of 60% or more, for example, 60%, 62%, 64%, and 66% or more. The upper limit thereof is not particularly limited, but may be 80% or less. In an embodiment, the elongation may be determined by curing the polyimide varnish into a polyimide film, cutting the film into a width of 10 mm and a length of 40 mm, and measuring the elongation using Instron5564 UTM instrument according to the ASTM D-882 standard.

In addition, the polyimide cured with the polyimide varnish may have a dielectric constant (Dk) of 4 or less, specifically 3.8 or less, 3.6 or less, or 3.5 or less, and the lower limit of the dielectric constant is not particularly limited, but may be 2.0 or more.

In another aspect of the present invention, there is provided a polyimide prepared by imidizing the polyimide varnish as described above, wherein the polyimide may be in the form of a film.

In still another aspect of the present invention, there is provided a polyimide coating material comprising a cured product of the polyimide varnish.

The polyimide coating material may have a coefficient of friction (PI-SUS) of 0.4 or less. The coefficient of friction may be specifically 0.39 or less, 0.38 or less, 0.36 or less, 0.34 or less, 0.32 or less, 0.30 or less, 0.29 or less, or 0.28 or less. When the coefficient of friction exceeds 0.4, there is a problem that when the polyimide varnish is coated as an insulating coating for the windings of electric vehicles (EVs), processed into a hairpin shape, and inserted into the motor core, the processability is reduced due to the shape deformation of the windings.

In an embodiment, a method for preparing the polyimide coating material may comprise coating polyimide varnish on a conductor surface; and imidizing the polyimide varnish coated on the conductor surface.

The conductor may be a copper wire made of copper or a copper alloy, but may also comprise conductors made of other metal materials such as silver wire, etc., or various metal-plated wires such as aluminum or tin-plated conducting wires, etc. The conductor and coating material may have a thickness according to the KS C3107 standard. A diameter of the conductor may be in the range of 0.3 to 3.2 mm, and a standard film thickness of the coating material (average value of the maximum film thickness and minimum film thickness) may be 21 to 194 µm for type 0, 14 to 169 µm for type 1, and 10 to 31 µm for type 2. Depending on the cross-sectional shape of the conductor, the conductor may be a round wire, a rectangular wire, a hexagonal wire, etc., but is not limited thereto.

The polyimide coating material according to the present invention may have a pulse endurance, which is the time that an insulating material withstands a certain voltage according to IEC-60851-5, of 170 minutes or more, wherein the pulse endurance may be, for example, 180 minutes or more, 200 minutes or more, 220 minutes or more, or 230 minutes or more.

In another aspect of the present invention, there is provided an electric wire comprising the polyimide coating material.

Specifically, the wire may be a coating wire comprising the polyimide coating material prepared by coating the polyamic acid solution on a surface of the wire, followed by imidization. In an embodiment, the coating wire may comprise an electric wire; and a coating material in which the above-described polyimide is coated on a surface of the electric wire and imidized.

Further, the present invention may provide an electronic device comprising the coating wire. The electronic device may be, for example, an electric motor.

Further, in still another aspect, there is provided a component comprising a molded body formed from the polyimide varnish.

Specifically, the component may be electronic circuit board members, semiconductor devices, lithium ion battery members, solar cell members, fuel cell members, motor windings, engine peripheral members, paints, optical components, heat insulators, electromagnetic shielding materials, surge components, dental materials, slide coatings, and electrostatic chucks.

### Method for preparing polyimide varnish

The method for preparing a polyimide varnish according to the present invention comprises mixing and heating a dianhydride monomer, a diamine monomer, surface-modified nanosilica with organosilane, a silicone-based additive, and an organic solvent.

Specifically, the method may comprise (a) mixing and heating surface-modified nanosilica surface-modified with organosilane and a dianhydride monomer in an organic solvent;
(b) adding a diamine monomer to perform a reaction; and
(c) preparing a polyimide varnish by adding a silicone-based additive; and may further comprise, after step (b) and before step (c), adding an aromatic carboxylic acid.

The organic solvents, dianhydride monomers, diamine monomers, surface-modified nanosilica with organosilane, silicone-based additives, etc., are applied in the same manner as the contents of the polyimide varnish described above.

### [Advantageous Effects]

The polyimide varnish of the present invention may have a self-lubricating property by reducing the coefficient of friction, resulting in excellent process efficiency, while simultaneously satisfying the heat resistance, insulation, and mechanical properties of polyimide and having excellent adhesion to a conductor, achieving excellent usability for wire coating.

### [Best Mode]

The following exemplary embodiments are presented to help understanding of the present invention. The following Examples are only provided to more easily understand the present invention, but the content of the present invention is not limited by these Examples.

### Examples

### Preparation Example 1. Silicone-based additive 1

Side-chain amino-modified silicone oil (refractive index 1.405 (based on 25°C), amino group equivalent 5,000 g/mol, viscosity 110 cP (based on 25°C), and specific gravity 0.97 g/mL (based on 25°C)).

### Preparation Example 2. Silicone-based additive 2

Side-chain amino-modified silicone oil (refractive index 1.408 (based on 25°C), amino group equivalent 1,600 g/mol, viscosity 1,000 cP (based on 25°C), and specific gravity 0.98 g/mL (based on 25°C)).

### Preparation Example 3. Silicone-based additive 3

Both-end amino-modified silicone oil (refractive index 1.418 (based on 25°C), amino group equivalent 430 g/mol, viscosity 12 cP (based on 25°C), and specific gravity 1.00 g/mL (based on 25°C)).

### Example 1. Polyimide varnish

Into a reaction vessel substituted with nitrogen gas, an organic solvent containing dimethylacetamide and a modifier was introduced, and pyromellitic dianhydride (PMDA) (99.6 mol% to 103.8 mol%) as an dianhydride monomer and surface-modified nanosilica with organosilane (ethylene glycol dispersed silica sol, organosilica sol with silica solid content of 20 wt%, average silica particle diameter of 70-100 nm, viscosity of 20-100 mPa•s, and moisture content of 2% or less) (0.75 wt%) were mixed and stirred at 40°C for 30 minutes. Then, 4,4'-diaminodiphenyl ether (ODA) (100 mol%) as a diamine monomer was added, pyromellitic acid (0 to 0.5 mol%) was added, and a silicone-based additive (0.53 wt%) was added. Then, the resulting mixture was stirred at 40°C for about 1 hour to polymerize, thereby preparing a polyamic acid solution having a solid content of 15 to 25 wt%.

### Comparative Examples 1 to 7. Polyimide varnish

Polyimide precursors were prepared in the same manner as in Example 1, except that components and amount ratios of the dianhydride monomer, the diamine monomer, the surface-modified nanosilica with organosilane, and the silicone-based additive were adjusted as shown in Table 1 below.

**[Table 1]**

| Classificat ion | Dianhydride monomer (mol%) | Diamine monomer (mol%) | Nanosilica (wt%) | Silicone additive (wt%) |
|---|---|---|---|---|
| Example 1 | PMDA (99.6 mol%) | ODA (100 mol%) | 0.75 | Preparation Example 1 (0.53 wt%) |
| Example 2 | PMDA (99.6 mol%) | ODA (100 mol%) | 0.75 | Preparation Example 2 (0.53 wt%) |
| Example 3 | PMDA (103.8 mol%) | ODA (100 mol%) | 0.75 | Preparation Example 1 (0.53 wt%) |
| Example 4 | PMDA (103.8 mol%) | ODA (100 mol%) | 0.75 | Preparation Example 2 (0.53 wt%) |
| Example 5 | PMDA (103.8 mol%) | ODA (100 mol%) | 0.75 | Preparation Example 1 (0.2 wt%) |
| Example 6 | PMDA (103.8 mol%) | ODA (100 mol%) | 0.75 | Preparation Example 1 (0.4 wt%) |
| Example 7 | PMDA (103.8 mol%) | ODA (100 mol%) | 0.75 | Preparation Example 1 (0.8 wt%) |
| Example 8 | PMDA (103.8 mol%) | ODA (100 mol%) | 0.75 | Preparation Example 3 (0.2 wt%) |
| Example 9 | PMDA (103.8 mol%) | ODA (100 mol%) | 0.75 | Preparation Example 3 (0.4 wt%) |
| Example 10 | PMDA (103.8 mol%) | ODA (100 mol%) | 0.75 | Preparation Example 3 (0.8 wt%) |
| Comparative Example 1 | PMDA (99.7 mol%) | ODA (100 mol%) | - | - |
| Comparative Example 2 | PMDA (103.8 mol%) | ODA (100 mol%) | - | - |
| Comparative Example 3 | PMDA (103.8 mol%) | ODA (100 mol%) | 0.75 | - |
| Comparative Example 4 | PMDA (99.6 mol%) | ODA (100 mol%) | - | Preparation Example 1 (0.53 wt%) |

### Experimental Examples

### Polyimide preparation for measurement of physical properties

Respective polyimide varnishes prepared in Examples and Comparative Examples were subjected to high-speed rotation at 1,500 rpm or higher to remove air bubbles. Then, each de-foamed polyimide varnish was applied to a glass substrate using a spin coater.

Under a nitrogen atmosphere, the obtained products were heated from room temperature up to 400°C at a rate of 4°C/min, heat-treated at 400°C for 60 minutes, and then cooled to 30°C at a rate of 4°C/min to obtain polyimide films each having a thickness of 20 ± 1.0 µm.

### Experimental Example 1. Coefficient of friction

Using the QM110CF model of QMESYS, the coefficient of friction was measured by ASTMD1894, D4918 method at a speed of 150 mm/min, a load of 200 g, a displacement of 65 mm, and an atmosphere of 23°C, and results thereof are shown in Table 2 below.

**[Table 2]**

| Classification | Coefficient of friction | |
|---|---|---|
| | Initial value | Average value |
| Example 1 | 0.26 | 0.27 |
| Example 5 | 0.33 | 0.34 |
| Example 6 | 0.34 | 0.35 |
| Example 7 | 0.32 | 0.33 |
| Example 8 | 0.32 | 0.34 |
| Example 9 | 0.29 | 0.31 |
| Example 10 | 0.29 | 0.30 |
| Comparative Example 1 | 0.46 | 0.48 |
| Comparative Example 2 | 0.45 | 0.46 |
| Comparative Example 3 | 0.39 | 0.41 |
| Comparative Example 4 | 0.43 | 0.49 |

It was found that the polyimide varnishes of the present invention had a low coefficient of friction (PI-SUS) of 0.4 or less.

In the present specification, the detailed description of the contents capable of being sufficiently recognized and inferred by those skilled in the art of the present disclosure are omitted, and many variations and modification can be made within a range that does not change the technical spirit or essential configuration of the present disclosure in addition to the specific exemplary embodiments described in the present specification. Therefore, the present disclosure may also be practiced in a manner different from that specifically described and illustrated herein, which can be understood by those skilled in the art.

## Claims

1. A polyimide varnish comprising:
polyamic acid comprising, as a polymerization unit, at least one dianhydride monomer and at least one diamine monomer;
surface-modified nanosilica with organosilane;
a silicone-based additive represented by the following Chemical Formula 1; and
an organic solvent: 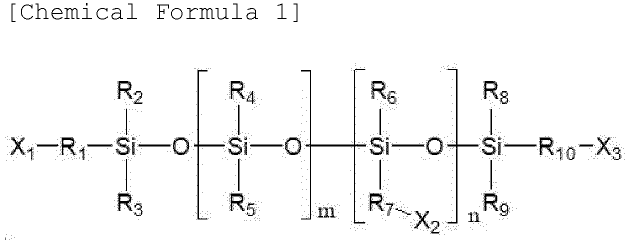
in Chemical Formula 1 above,
R₁ to R₁₀ are each independently a C₁₋₂₀ alkyl group or a C₆₋₂₀ aryl group; and
X₁ to X₃ are each independently a hydrogen atom, a C₁₋₃ alkyl group, a C₆₋₁₀ aryl group, a hydroxyl group, an amino group, an epoxy group, an acrylic group, an acid anhydride group, a carboxyl group, a methacryl group, a mercapto group, or a polyether group,
wherein at least one of X₁ to X₃ is a hydroxyl group, an amino group, an epoxy group, an acrylic group, an acid anhydride group, a carboxyl group, a methacryl group, a mercapto group, an alkoxy group, a silanol group or a polyether group, and
m and n are each independently an integer from 0 to 50, where m+n is 1 or more.

2. The polyimide varnish of claim 1, wherein the dianhydride monomer comprises at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl) propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy) benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride.

3. The polyimide varnish of claim 1, wherein the diamine monomer comprises at least one selected from the group consisting of 1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 4,4'-diamino diphenyl ether, 3,4'-diaminodiphenyl ether, 4,4'-diaminodiphenylmethane (MDA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenyl methane, 3,3'-dicarboxy-4,4'-diaminodiphenylmethane, 3,3',5,5'-tetramethyl-4,4'-diamino diphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenylphenoxy)benzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy) phenyl] ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy) phenyl] propane, 2,2-bis[3-(4-aminophenoxy) phenyl] propane, 2,2-bis[4-(3-aminophenoxy) phenyl] propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

4. The polyimide varnish of claim 1, wherein the organosilane of the surface-modified nanosilica with organosilane comprises at least one selected from the group consisting of methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltrimethoxysilane, phenyltriethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, vinyltris(2-methoxyethoxy)silane, glycidoxypropyl trimethoxysilane (GPTMS), 3-aminopropyltrimethoxy-silane (APTMS), phenyltrimethoxysilane (PTMS), and N-phenyl-3-aminopropyltrimethoxysilane (PAPTES).

5. The polyimide varnish of claim 1, wherein the surface-modified nanosilica with organosilane has an average particle diameter of 10 to 200 nm.

6. The polyimide varnish of claim 1, wherein the silicone-based additive represented by Chemical Formula 1 is a silicone-based additive represented by the following Chemical Formula 2: 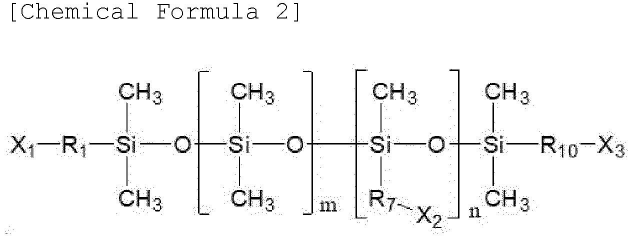 in Chemical Formula 2 above,
R₁, R₇, and R₁₀ are each independently a C₁₋₂₀ alkyl group; and
X₁ to X₃ are each independently a hydrogen atom, a C₁₋₃ alkyl group, a C₆₋₁₀ aryl group, a hydroxyl group, an amino group, an epoxy group, an acrylic group, an acid anhydride group, a carboxyl group, a methacryl group, a mercapto group, an alkoxy group, a silanol group, or a polyether group,
wherein at least one of X₁ to X₃ is a hydroxyl group, an amino group, an epoxy group, an acrylic group, an acid anhydride group, a carboxyl group, a methacryl group, a mercapto group, or a polyether group, and
m and n are each independently an integer from 0 to 50, where m+n is 1 or more.

7. The polyimide varnish of claim 1, wherein the silicone-based additive has a refractive index of 1.40 to 1.50 (based on 25°C),
a functional group equivalent of 100 to 10,000 g/mol, and
a viscosity of 10 to 20,000 cP (based on 25°C),
wherein the functional group is a hydroxyl group, an amino group, an epoxy group, an acrylic group, an acid anhydride group, a carboxyl group, a methacryl group, a mercapto group, an alkoxy group, a silanol group, or a polyether group.

8. The polyimide varnish of claim 1, wherein the organic solvent is at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), Diglyme, and naphthalene.

9. The polyimide varnish of claim 8, wherein the organic solvent further comprises a modifier containing a hydroxyl group (OH) or an amine group (NH).

10. The polyimide varnish of claim 9, wherein the modifier containing a hydroxyl group (OH) or an amine group (NH) is at least one selected from the group consisting of ethylamine, triethanolamine, dimethylamine, trimethylamine, diethylenetriamine, ethylenediamine, tributylamine, pyridine, pyrrolidine, methanol, ethanol, propanol, isopropanol, sec-butanol, tert-butanol, n-amyl alcohol, isoamyl alcohol, hexanol, octanol, capryl alcohol, nonyl alcohol, decyl alcohol, undecyl alcohol, lauryl alcohol, myristyl alcohol, cetyl alcohol, stearyl alcohol, allyl alcohol, crotyl alcohol, propargyl alcohol, ethylene glycol, propylene glycol, benzyl alcohol, and phenol.

11. The polyimide varnish of claim 1, wherein a polyimide solid content contains in an amount of 10 to 30 parts by weight based on 100 parts by weight of the total polyimide varnish.

12. The polyimide varnish of claim 1, wherein the surface-modified nanosilica with organosilane contains in an amount of 0.3 to 7 parts by weight based on 100 parts by weight of the total polyimide varnish.

13. The polyimide varnish of claim 1, wherein the silicone-based additive contains in an amount of 0.05 to 5 parts by weight based on 100 parts by weight of the total polyimide varnish.

14. The polyimide varnish of claim 1, wherein pyromellitic dianhydride (PMDA) contains in a ratio of 50 mol% or more among the total dianhydride monomers.

15. The polyimide varnish of claim 1, wherein 4,4'-diaminodiphenyl ether (ODA) contains in a ratio of 50 mol% or more among the total diamine monomers.

16. The polyimide varnish of claim 1, further comprising an aromatic carboxylic acid.

17. The polyimide varnish of claim 16, wherein the aromatic carboxylic acid comprises at least one selected from the group consisting of pyromellitic acid (PMA), 3,3',4,4'-biphenyltetracarboxylic acid (BPTA), 1,2,3,4-benzenetetracarboxylic acid, benzophenone-3,3',4,4'-tetracarboxylic acid, pyrazinetetracarboxylic acid, 2,3,6,7-naphthalenetetracarboxylic acid, and naphthalene-1,4,5,8-tetracarboxylic acid.

18. The polyimide varnish of claim 1, wherein the dianhydride monomer contains in an amount of 95 to 105 mol% based on 100 mol% of the diamine monomer.

19. The polyimide varnish of claim 18, wherein 0 to 1.0 mol% of an aromatic carboxylic acid is further contained.

20. The polyimide varnish of claim 1, wherein the polyimide varnish has a viscosity of 500 to 20,000 cP measured at a temperature of 30°C and a shear rate of 1 s⁻¹.

21. A polyimide coating material comprising a cured product of the polyimide varnish according to claim 1.

22. The polyimide coating material of claim 21, wherein the polyimide coating material has a coefficient of friction (PI-SUS) of 0.4 or less.

23. An electric wire comprising the polyimide coating material according to claim 21.

24. A component comprising a molded body formed from the polyimide varnish according to any one of claims 1 to 20.

25. The component of claim 24, the component is any one of electronic circuit board members, semiconductor devices, lithium ion battery members, solar cell members, fuel cell members, motor windings, engine peripheral members, paints, optical components, heat insulators, electromagnetic shielding materials, surge components, dental materials, slide coatings, and electrostatic chucks.
